# EUROPEAN PATENT SPECIFICATION

(11) **EP 3 800 401 B1**
(45) Date of publication and mention of the grant of the patent: **12.04.2023**
(21) Application number: 20199428.2
(22) Date of filing: 30.09.2020
(51) Int. Cl.: F24C 7/06, A47J 37/06, F24C 15/34

(54) **A COOKING DEVICE**
KOCHVORRICHTUNG
DISPOSITIF DE CUISSON

(30) Priority: 01.10.2019 TR 201914893
(43) Date of publication of application: 07.04.2021
(73) Proprietor: Arçelik Anonim Sirketi, 34445 Istanbul (TR)
(72) Inventor: BICER, Emrah, 34950 ISTANBUL (TR); SERABATIR, Davut Ayhan, 34950 ISTANBUL (TR); USTA, Kadir, 34950 ISTANBUL (TR); CETINKAYA, Veysel Ertan, 34950 ISTANBUL (TR); ACAR, Ayse, 34445 Istanbul (TR)

(56) References cited:
- EP-A2- 1 553 349
- JP-A- S60 240 923
- JP-U- S49 132 292
- US-A- 1 282 195
- US-A- 2 511 790
- US-A1- 2005 098 047

## Description

The present invention relates to a cooking device comprising a heater.

Today cooking devices are used for preparing foodstuffs by means of processes such as heating, cooking, etc. The cooking devices exhibit structural and design differences depending on the need and can be used in a wide field. The oven is one of the most frequently used devices to prepare foodstuffs. The cooking process in the ovens is performed by transmitting the heat generated by the heater onto the foodstuffs placed into the cooking chamber. During the cooking process, the temperature of the heater reaches high values, and the foodstuffs positioned in the cooking regions which directly receive heat from the heater may be damaged. The state of the art protective plates which prevent the foodstuffs from getting damaged are placed into the oven, but have difficulty to perform their functions and remain ineffective.

In the state of the art European Patent Application Document No. EP1598598, a cooking device is disclosed, a bar-shaped heater which homogeneously dissipates the heat in the cooking chamber, thus providing the cooking of the foodstuffs.

JP S60 240923 A discloses an electric cooker with electric heaters which heat the foodstuff to be cooked from above, and a flat far infrared radiating body which is located between the electric heaters and the foodstuff to be cooked, to prevent uneven cooking of foodstuff and to enable the foodstuff to be evenly cooked and thoroughly heated to the interior.

US 2005/098047 A1 discloses an oven shelf provided with a heat shield that protects the bakeware from infrared rays and burning.

US 2 511 790 A discloses a cooking device provided with a shield member between a heating element and the tray for supporting articles to be broiled by the heating element, for diffusely transmitting heat radiation received from the heating element to more uniformly heat the food articles.

The aim of the present invention is the realization of a cooking device wherein the foodstuffs placed into the cooking chamber are prevented from being damaged due to the heat emitted by the heater.

The cooking device realized in order to attain the aim of the present invention, explicated in the first claim and the respective claims thereof, comprises a body; a cooking chamber which is disposed in the body and wherein the foodstuffs to be cooked are placed; and a casing which surrounds the cooking chamber. The casing is in the form of a box with the front side open, having a rear wall covering the rear surface of the body and a ceiling cover the upper surface of the body. In the cooking chamber, at least one heater is disposed, which provides the heat required for the cooking of the foodstuffs during the cooking process. On the body, a door is disposed, which interrupts the contact between the cooking chamber and the outer environment. The heaters are positioned closed to the walls of the cooking chamber and generate a hot air to be dissipated in the cooking chamber so as to perform the cooking process. During the cooking process, the temperature of the heater reaches high values, and the foodstuff surface which directly receives heat from the heater is damaged. A protective wire is positioned between the heater and the foodstuff placed in the cooking chamber and is arranged to distribute the heat generated by the heater into the cooking chamber. The protective wire is preferably produced from a refractory material.

The cooking device of the present invention comprises a dampening plate which is disposed onto the protective wire and which dampens the heat transmitted onto the foodstuff by the heater so as to prevent the foodstuff from being damaged. By means of the dampening plate, a homogeneous heat distribution is ensured on the foodstuff which is prevented from being damaged due to direct heat transmission, thus providing a homogeneous cooking process.

In the present invention, the cooking device comprises a plurality of housings which are arranged on the protective wire. A plurality of claws provided on the dampening plate are inserted into the housings. Thus, the dampening plate is easily attached onto the protective wire and is prevented from moving in the vertical direction.

In an embodiment of the present invention, the cooking device comprises the protective wire having a plurality of recesses on the surfaces thereof in the contact with the dampening plate. The recesses are in the form of steps so as to allow the dampening plate to be positioned on the protective wire. Thus, the dampening plate is prevented from moving in the horizontal direction.

In another embodiment of the present invention, the cooking device comprises a plurality of first openings which are arranged on the rear wall. Thus, the ends of the protective wire are passed through the first openings to be positioned.

In another embodiment of the present invention, the cooking device comprises a plurality of second openings which are arranged on the ceiling. The protective wire passed through the first openings on the rear wall is moved upwards in the vertical direction, and placed on the ceiling by passing the ends thereof through the second openings.

In another embodiment of the present invention, the cooking device comprises a plurality of connection members which are provided on the casing. The protective wire passed through the first openings and the second openings is fixed onto the casing by means of the connection members.

By means of the present invention, a cooking device is realized, wherein the foodstuff is prevented from being damaged due to the direct heat emitted by the heater into the cooking chamber by means of the dampening plate easily placed onto the protective wire.

The cooking device realized in order to attain the aim of the present invention is illustrated in the attached figures, where:

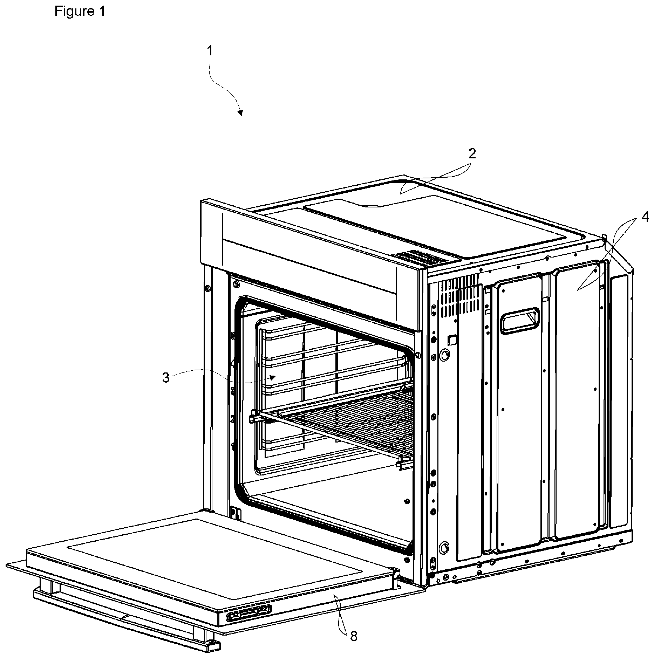

Figure 1 - is the front perspective view of the cooking device.

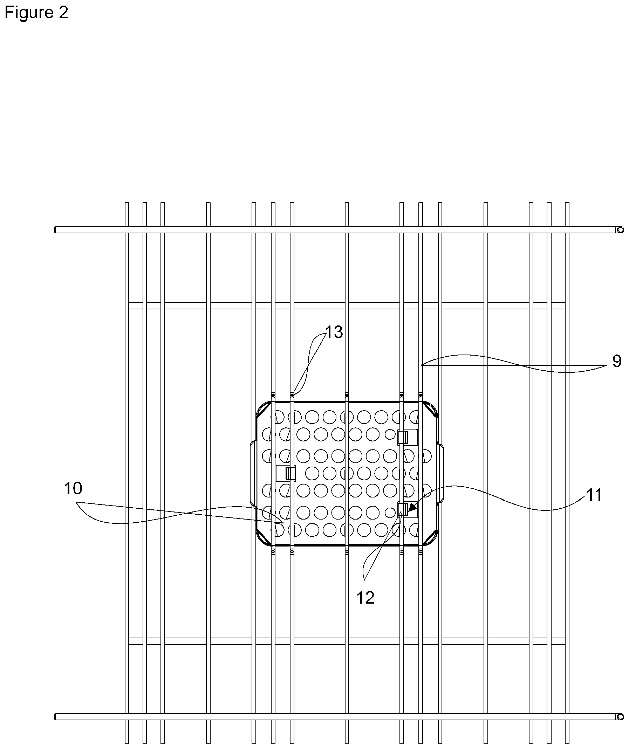

Figure 2 - is the top schematic view of the dampening plate placed onto the protective wire in an embodiment of the present invention.

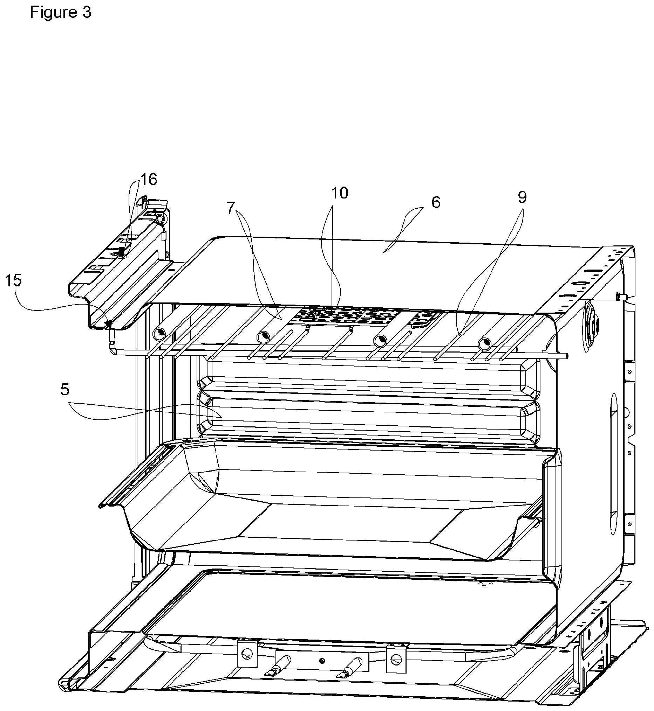

Figure 3 - is the front perspective view of the cooking device comprising the dampening plate in an embodiment of the present invention.

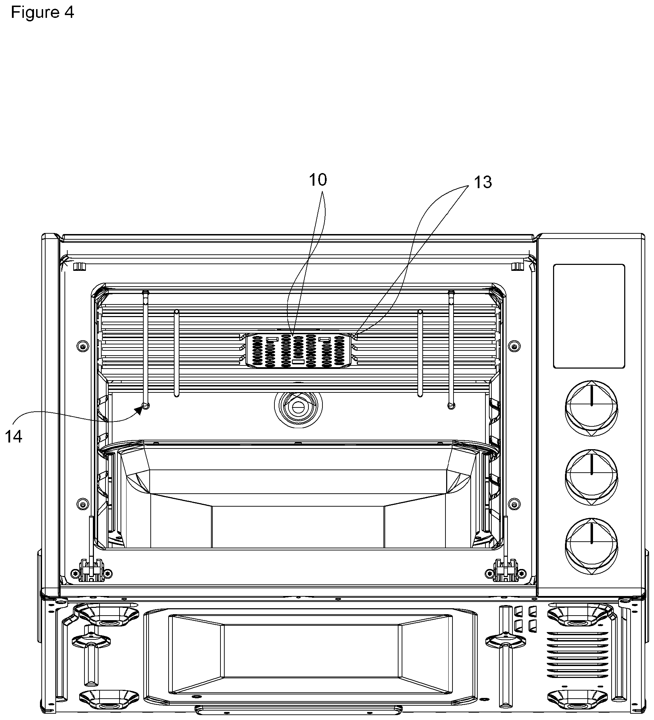

Figure 4 - is the front schematic view of the cooking device comprising the dampening plate placed onto the rear wall in an embodiment of the present invention.

The elements illustrated in the figures are numbered as follows:
1. Cooking device
2. Body
3. Cooking chamber
4. Casing
5. Rear wall
6. Ceiling
7. Heater
8. Door
9. Protective wire
10. Dampening plate
11. Housing
12. Claw
13. Recess
14. First Opening
15. Second Opening
16. Connection member

The cooking device (1) comprises a body (2); a cooking chamber (3) which is disposed in the body (2) and wherein the foodstuffs to be cooked are placed; a casing (4) in the form of a box with the front side open surrounding the cooking chamber (3), which has a rear wall (5) covering the rear surface of the body (2) and a ceiling (6) covering the top surface of the body (2); at least one heater (7) which is disposed in the cooking chamber (3) and which provides the cooking of the foodstuffs during the cooking process; a door (8) which is disposed on the body (2) and which interrupts the contact between the cooking chamber (3) and the outer environment; and a protective wire (9) which is positioned between the heater (7) and the foodstuff placed in the cooking chamber (3) and which is arranged to distribute the heat generated by the heater (7) into the cooking chamber (3). By means of the heater (7), hot air is generated and distributed in the cooking chamber (3), thus performing the cooking process.

The cooking device (1) of the present invention comprises a dampening plate (10) which is disposed onto the protective wire (9) and which dampens the heat transmitted onto the foodstuff by the heater (7) so as to prevent the foodstuff from being damaged. The heat generated by the heater (7) is dampened by means of the dampening plate (10) while being distributed into the cooking chamber (3) via the protective wire (9). Thus, the foodstuff is prevented from directly receiving heat and being damaged.

In the present invention, the cooking device (1) comprises a plurality of housings (11) which are arranged on the protective wire (9), and the dampening plate (10) having a plurality of claws (12) which engage with the housings (11) so as to be prevented from moving in the vertical axis. The claws (12) provided on the dampening plate are inserted into the housings (11) on the protective wire (9). Thus, the dampening plate (10) is easily attached onto the protective wire (9) and is prevented from moving in the vertical direction and being separated from the protective wire (9).

In an embodiment of the present invention, the cooking device (1) comprises the protective wire (9) having a plurality of recesses (13) on the surfaces thereof in the contact with the dampening plate (10) so as to prevent the dampening plate (10) from moving in the horizontal axis. By means of the recesses (13) positioned so as to align with the edges of the dampening plate (10), the dampening plate (10) is prevented from moving in the horizontal axis. The dampening plate (10) can be positioned in different ways on the protective wire (9).

In another embodiment of the present invention, the cooking device (1) comprises a plurality of first openings (14) which are arranged on the rear wall (5) and which enable the ends of the protective wire (9) to be placed onto the rear wall (5). The ends of the protective wire (9) are passed through the first openings (14) and then the protective wire (9) is moved upwards to be placed onto the rear wall (5).

In another embodiment of the present invention, the cooking device (1) comprises a plurality of second openings (15) which are arranged on the ceiling (6) and which enable the ends of the protective wire (9) passed through the first openings (14) to be passed therethrough so as to placed onto the ceiling (6). After the ends of the protective wire (9) are passed through the first openings (14) on the rear wall so as to be positioned, the protective wire (9) is moved upwards and passed through the second openings (15). Thus, the protective wire (9) is placed onto the ceiling (6).

In another embodiment of the present invention, the cooking device (1) comprises a plurality of connection members (16) which are arranged on the casing (4) and which enable the protective wire (9) passed through the second openings (15) to be fixed onto the casing (4). The protective wire (9) placed onto the rear wall (5) and the ceiling (6) is fixed onto the casing (4) by means of the connection members (16). There are preferably two connection members (16) for fixing the two ends of the protective wire (9), and snap-rings are used as the connection members (16).

By means of the present invention, the cooking device (1) is realized, comprises the dampening plate (1) which is disposed between the heater (7) and the protective wire (9) so as to dampen the heat transmitted into the cooking chamber (3) by the heater (7) so as to prevent the foodstuff from being damaged. The dampening plate (10) is easily placed on the protective wire (9) and is prevented from moving in the horizontal and vertical axes.

## Claims

1. A cooking device (1) **comprising** a body (2); a cooking chamber (3) which is disposed in the body (2) and wherein the foodstuffs to be cooked are placed; a casing (4) in the form of a box with the front side open surrounding the cooking chamber (3), which has a rear wall (5) covering the rear surface of the body (2) and a ceiling (6) covering the top surface of the body (2); at least one heater (7) which is disposed in the cooking chamber (3) and which provides the cooking of the foodstuffs during the cooking process; a door (8) which is disposed on the body (2) and which interrupts the contact between the cooking chamber (3) and the outer environment; a protective wire (9) which is positioned between the heater (7) and the foodstuff placed in the cooking chamber (3) and which is arranged to distribute the heat generated by the heater (7) into the cooking chamber (3); a dampening plate (10) which is disposed onto the protective wire (9) and which dampens the heat transmitted onto the foodstuff by the heater (7) so as to prevent the foodstuff from being damaged, **characterized by** a plurality of housings (11) which are arranged on the protective wire (9), and the dampening plate (10) having a plurality of claws (12) which engage with the housings (11) so as to be prevented from moving in the vertical axis.

2. A cooking device (1) as in claim 1, **characterized by** the protective wire (9) having a plurality of recesses (13) on the surfaces thereof in the contact with the dampening plate (10) so as to prevent the dampening plate (10) from moving in the horizontal axis.

3. A cooking device (1) as in claim 2, **characterized by** the recesses (13) being in the form of steps so as to allow the dampening plate (10) to be positioned on the protective wire (9).

4. A cooking device (1) as in any one of the above claims, **characterized by** a plurality of first openings (14) which are arranged on the rear wall (5) and which enable the ends of the protective wire (9) to be placed onto the rear wall (5).

5. A cooking device (1) as in Claim 4, **characterized by** a plurality of second openings (15) which are arranged on the ceiling (6) and which enable the ends of the protective wire (9) passed through the first openings (14) to be passed therethrough so as to be placed onto the ceiling (6).

6. A cooking device (1) as in Claim 5, **characterized by** a plurality of connection members (16) which are arranged on the casing (4) and which enable the protective wire (9) passed through the second openings (15) to be fixed onto the casing (4).

## Patentansprüche

1. Ein Kochgerät (1) **umfasst** einen Körper (2); eine Kochkammer (3), die in dem Körper (2) angeordnet ist und in der die zu kochenden Lebensmittel platziert werden; ein Gehäuse (4) in Form eines Kastens mit offener Vorderseite, der die Kochkammer (3) umgibt, das eine Rückwand (5) aufweist, die die hintere Oberfläche des Körpers (2) bedeckt, und eine Decke (6), die die obere Oberfläche des Körpers (2) bedeckt; mindestens eine im Kochkammer (3) angeordnete Heizung (7), die während des Garvorgangs für das Garen der Lebensmittel sorgt; eine Tür (8), die an dem Körper (2) angeordnet ist und die den Kontakt zwischen der Kochkammer (3) und der äußeren Umgebung unterbricht; einen Schutzdraht (9), der zwischen dem Heizung (7) und dem in der Kochkammer (3) angeordneten Lebensmittel positioniert ist und der so angeordnet ist, dass er die von dem Heizung (7) erzeugte Wärme in die Kochkammer (3) verteilt; eine auf dem Schutzdraht (9) angeordnete Dämpfungsplatte (10), die die von der Heizung (7) auf das Lebensmittel übertragene Wärme dämpft, um eine Beschädigung des Lebensmittels zu vermeiden, **gekennzeichnet ist es durch** eine Vielzahl von Gehäusen (11), die auf dem Schutzdraht (9) angeordnet sind, und die Dämpfungsplatte (10) eine Vielzahl von Klauen (12) aufweist, die mit den Gehäusen (11) in Eingriff stehen, um so daran gehindert zu werden, sich in der vertikale Achse zu bewegen.

2. Ein Kochgerät (1), wie in Anspruch 1 aufgeführt, **ist dadurch gekennzeichnet, dass** der Schutzdraht (9) eine Vielzahl von Aussparungen (13) auf seinen Oberflächen in Kontakt mit der Dämpfungsplatte (10) aufweist, um zu verhindern, dass sich die Dämpfungsplatte (10) in der horizontalen Achse bewegt.

3. Ein Kochgerät (1), wie in Anspruch 2 aufgeführt, **ist dadurch gekennzeichnet, dass** die Aussparungen (13) stufenförmig ausgebildet sind, um ein Aufsetzen der Dämpfungsplatte (10) auf den Schutzdraht (9) zu ermöglichen.

4. Ein Kochgerät (1), wie in einem der vorherigen Ansprüchen aufgeführt, **ist dadurch gekennzeichnet, dass** mehrere an der Rückwand (5) angeordnete erste Öffnungen (14), die ein Auflegen der Enden des Schutzdrahtes (9) auf die Rückwand (5) ermöglichen.

5. Ein Kochgerät (1), wie in Anspruch 4 aufgeführt, **ist dadurch gekennzeichnet, dass** mehrere zweite Öffnungen (15), die an der Decke (6) angeordnet sind und die ermöglichen, dass die durch die ersten Öffnungen (14) geführten Enden des Schutzdrahts (9) hindurchgeführt werden, um an der Decke (6) platziert zu werden.

6. Ein Kochgerät (1), wie in Anspruch 5 aufgeführt, **ist dadurch gekennzeichnet, dass** eine Vielzahl von Verbindungselementen (16), die an dem Gehäuse (4) angeordnet sind und die es ermöglichen, den durch die zweiten Öffnungen (15) geführten Schutzdraht (9) an dem Gehäuse (4) zu befestigen.

## Revendications

1. Appareil de cuisson (1) **comprenant** un corps (2) ; une chambre de cuisson (3) qui est disposée dans le corps (2) et dans laquelle sont placés les aliments à cuire ; un boîtier (4) sous la forme d'une boîte avec le côté avant ouvert entourant la chambre de cuisson (3), qui a une paroi arrière (5) couvrant la surface arrière du corps (2) et un plafond (6) couvrant la surface supérieure du corps (2) ; au moins un dispositif de chauffage (7) qui est disposé dans la chambre de cuisson (3) et qui assure la cuisson des aliments pendant le processus de cuisson ; une porte (8) qui est disposée sur le corps (2) et qui interrompt le contact entre la chambre de cuisson (3) et l'environnement extérieur ; un fil de protection (9) qui est positionné entre le dispositif de chauffage (7) et les aliments placés dans la chambre de cuisson (3) et qui est agencé pour distribuer la chaleur générée par le dispositif de chauffage (7) dans la chambre de cuisson (3) ; une plaque d'amortissement (10) qui est disposée sur le fil de protection (9) et qui amortit la chaleur transmise sur l'aliment par le dispositif de chauffage (7) afin d'empêcher l'endommagement de l'aliment, **caractérisée par** une pluralité de logements (11) qui sont disposés sur le fil de protection (9), et la plaque d'amortissement (10) ayant une pluralité de griffes (12) qui s'engagent avec les logements (11) afin d'être empêchées de se déplacer dans l'axe vertical.

2. Appareil de cuisson (1) selon la déclaration 1, **caractérisé par le fait que** le fil de protection (9) comporte une pluralité d'évidements (13) sur ses surfaces en contact avec la plaque d'amortissement (10) de manière à empêcher la plaque d'amortissement (10) de se déplacer selon l'axe horizontal.

3. Appareil de cuisson (1) selon la déclaration 2, **caractérisé par le fait que** les évidements (13) ont la forme de gradins de façon à permettre à la plaque d'amortissement (10) d'être positionnée sur le fil de protection (9).

4. Appareil de cuisson (1) comme dans l'une quelconque des déclarations précédentes, **caractérisé par** une pluralité de premières ouvertures (14) qui sont disposées sur la paroi arrière (5) et qui permettent aux extrémités du fil de protection (9) d'être placées sur la paroi arrière (5).

5. Appareil de cuisson (1) selon la déclaration 4, **caractérisé par** une pluralité de secondes ouvertures (15) qui sont agencées sur le plafond (6) et qui permettent aux extrémités du fil de protection (9) passées à travers les premières ouvertures (14) de passer à travers celles-ci afin d'être placées sur le plafond (6).

6. Appareil de cuisson (1) selon la déclaration 1, **caractérisé par** une pluralité d'éléments de connexion (16) qui sont disposés sur le boîtier (4) et qui permettent au fil de protection (9) passé à travers les secondes ouvertures (15) d'être fixé sur le boîtier (4).
